# EUROPEAN PATENT APPLICATION

(11) **EP 4 209 454 A1**
(43) Date of publication of application: **12.07.2023**
(21) Application number: 22150921.9
(22) Date of filing: 11.01.2022
(51) Int. Cl.: C01B 21/26, B01D 53/56, C01B 21/28, C01B 21/38

(54) **MONO PRESSURE SYSTEM FOR PRODUCING NITRIC ACID AND METHOD OF OPERATING THEREOF**

(71) Applicant: Yara International ASA, 0277 Oslo (NO)
(72) Inventor: Vigeland, Bent, 3714 Skien (NO); Øien, Halvor, 3943 Porsgrunn (NO); Fauconnier, Peter, 1850 Grimbergen (BE); de Smet, Andre, 4535 JH Terneuzen (NL)
(74) Representative: De Clercq & Partners

(57) **Abstract**

The present disclosure discloses a system for producing nitric acid at reduced power, the system being a standard mono pressure nitric acid plant characterised in that the system further comprises means for splitting (**55**) the tail gas (**5**) into a first tail gas stream (**52**) in fluid communication with an oxygen-rich gas (**50**) upstream the ammonia mixing unit (**35**), and a second tail gas stream (**74**), means for pressurising a gas (**53**) downstream the absorption tower (**10**), and means for adjusting the amount of tail gas (**5**) being splitted into the first tail gas stream (**52**) and the second tail gas stream (**74**), such that an air compressor (**36**) is not required. The present disclosure further relates to a method for operating the system, to the use of the system of the disclosure for performing the method of the disclosure and to a method for revamping a standard mono pressure nitric acid plant into the system of the disclosure.

## Description

### Field

The present disclosure relates to the field of nitric acid production in a mono pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in several stages. The ammonia is first oxidized in an ammonia burner on platinum gauzes (commonly called ammonia converter) or cobalt balls, producing nitric oxide (in this disclosure also called nitrogen monoxide (NO)) and water:

4 NH₃ (g) + 5 O₂ (g) → 4 NO (g) + 6 H₂O (g) (1)

The reaction product from (1), nitric oxide, following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOₓ gases, and finally by heating the tail gas released at the outlet of the absorption tower in which the NOₓ gases are absorbed.

By absorption in water, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + 2 H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono-pressure (single-pressure) and dual pressure (split-pressure) process.

In a mono-pressure process, the converter and the absorber unit operate at roughly the same working pressure. Such mono-pressure process generally includes low-pressure (2 to 6 bara) and high-pressure (from above 6 to 16 bara, in particular 9 to 16 bara) processes.

The drive power for the air compressor typically originates from a tail-gas turbine and a steam turbine or electric motor. Accordingly, the compressor train of mono pressure nitric acid production plant typically comprises an air compressor, a tail-gas turbine, and a steam turbine or electric motor.

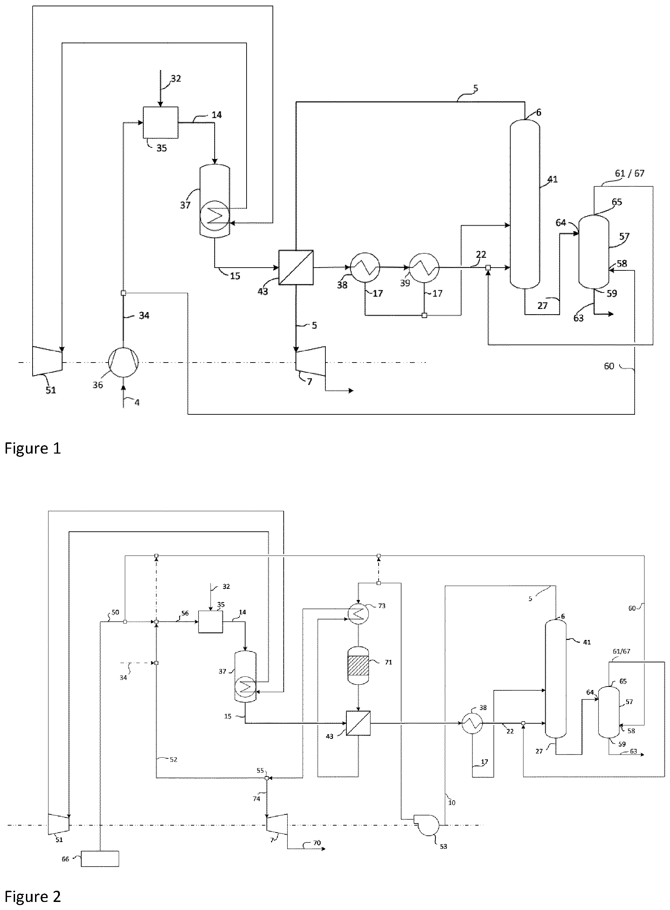

More in detail, referring to Figure 1, a mono pressure plant and process according to the prior art works as follows. Gaseous ammonia **32**, optionally pre-heated in a pre-heater unit (not shown) is mixed with compressed air **34** pressurised using an air compressor **36**, in a mixing apparatus **35**, and the resulting ammonia/oxygen-enriched air mixture **14** is fed to an ammonia converter **37**, where ammonia is oxidized over a suitable catalyst, thus obtaining a NOₓ gas/steam mixture **15**, comprising water and nitric oxide (NO). The heat of the mixture coming out of the ammonia converter is recovered, after which the NOₓ gas/stream mixture is subsequently cooled down in a gas cooler/condenser **38** to a temperature where the water condenses, and an aqueous diluted nitric acid mixture **17** is separated from a gaseous NOₓ stream **22.** The gaseous NOₓ stream is further oxidized to further convert the NO to NO₂ and N₂O₄ to separate out another aqueous diluted nitric acid mixture **17** which is directed to an absorption tower **41**, commonly called absorption tower. On the other end, the gaseous NOₓ stream **22** is sent to the absorber unit **41** too. Inside the absorber unit **41**, the NOₓ gas reacts with water to produce the tail gas **5** and a stream of raw nitric acid **27** also containing residual NOₓ gas, which is fed to a bleacher **57.** The residual NOₓ gas in the raw nitric acid stream **27** is then stripped out with a gaseous medium **60** such as an oxygen-containing gas or air, inside the bleacher **57**; the bleacher unit is generally operated at about the same pressure as the ammonia converter. The drive power for both the air compressor **36** originates from a tail gas expander **7** and a steam turbine **51** or electric motor (not shown). The tail gas **5** exchanges heat with the NOₓ gas/steam mixture **15** in the tail gas heater **43** and is expanded in the tail gas expander **7.**

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. This revamping has significant drawbacks. First of all, it entails elevated costs for the modification or replacement of the existing equipment, i.e. the air compressor and the corresponding turbines and electrical motor. In addition, the revamping of the equipment is also technically demanding, leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction or even suppression of power required to operate the air compressor in a mono nitric acid plant.

### Background Prior Art

In CN110540178A (China Chengda Engineering Co Ltd, 2019), process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor.

A further air compressor is also provided, which supplies the first HP bleacher unit with air. Hence, energy is required in order to operate a first HP bleacher unit at a high-pressure and then recycle NOₓ gases to the delivery side of the NOₓ gas compressor. Therefore, there remains a need for a process and a corresponding plant setup for minimizing or even suppressing the amount of energy required in order to operate the air compressor, in order to avoid bottle-necks in the nitric acid production throughput associated with those compressors.

### Summary

In one aspect of the disclosure a production plant for producing nitric at reduced power consumption and reduced emissions, is disclosed. The production plant comprises a source of pressurised air and is in fluid communication with a system comprising:
- a source of an oxygen-rich gas;
- a mixing apparatus downstream the oxygen-rich gas, for mixing an oxygen-containing gas having a pressure P1 with an ammonia gas stream, to produce an ammonia/oxygen-containing gas mixture;
- means for measuring the oxygen concentration in the oxygen-containing gas;
- means for adjusting the concentration of oxygen in the oxygen-containing gas such that the oxygen to ammonia molar ratio at the inlet of the ammonia converter is at least 1.25;
- means for adjusting the supply of the ammonia gas stream to the mixing apparatus;
- an ammonia converter operable at a pressure P1 equal to or lower than the pressure of the source of oxygen-rich gas, for oxidising ammonia in the ammonia/oxygen-containing gas mixture, to produce a NOₓ gas/steam mixture, comprising water and nitric oxide;
- means for measuring the temperature in the ammonia converter;
- a gas cooler/condenser downstream the ammonia converter, to produce an aqueous diluted nitric acid mixture and a gaseous NOₓ stream;
- an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas;
- means for measuring the concentration of oxygen in a tail gas stream downstream the absorption tower;
- a supply for an oxygen-rich gas, for supplying oxygen between the ammonia converter and the absorption tower, such that the tail gas contains at least 0.5% by volume oxygen; and
- a tail gas heater, positioned upstream from the gas cooler/condenser, for heating the tail gas coming from the absorption tower to a temperature up to 650 °C with the heat from the NOₓ gas/steam mixture coming from the ammonia converter;

The production plant is characterised in that the system further comprises:
- means for pressurising a gas to a pressure P1, located anywhere downstream the absorption tower, or anywhere between the ammonia converter and the absorption tower, or upstream the ammonia in the oxygen-containing stream or in the ammonia/oxygen-containing gas mixture;
- means for splitting a stream of tail gas downstream the absorption tower into a first tail gas stream in fluid communication with the oxygen-rich gas and a second tail gas stream; and
- means for adjusting the amount of tail gas being splitted into the first tail gas stream and the second tail gas stream.

The inventors have found that, instead of continuously supplying pressurised air provided by an air compressor to the mixing unit at a pressure P1, it is possible to recirculate the first tail gas stream provided by the means for splitting at a pressure P1. Therefore, compressed air only has to be supplied in order to start the process but no longer after the production of the tail gas has started and an air compressor is not required. In addition, the oxygen-rich gas having a pressure P1 and the supply of an oxygen-rich gas, respectively provide oxygen to the ammonia converter and to the absorption tower, such that, in the absence of the primary and secondary air provided by the air compressor, the amount of oxygen in the ammonia converter and in the absorption tower is similar to that in a standard dual pressure nitric acid plant.

In the absence of an air compressor and with the additional tail gas stream being recirculated in the system, not only is the power demand of the system reduced: the NOₓ emissions leaving the system are also reduced. Therefore, the size of the treatment unit for treating those NOₓ emissions is reduced with respect to the size in the corresponding standard mono pressure nitric acid plant.

In one embodiment according to the production plant of the disclosure, the system further comprises:
- a heat exchanger, for exchanging heat between the tail gas and the stream of tail gas exiting the heat heater, wherein the stream of tail gas having exchanged heat with the tail gas is splitted in the means for splitting downstream the heat exchanger and wherein the means for pressurising are located upstream the heat exchanger;
- a De-NOₓ treatment unit; and
- a steam turbine, wherein the steam turbine can at least partly power the means for pressurising.

In one embodiment according to the production plant of the disclosure, the production plant further comprises a bleacher comprising an inlet for an oxygen-rich bleaching gas, an inlet for the stream of raw nitric acid containing residual NOₓ gas, an outlet for bleached nitric acid and an outlet for bleaching gases, and the bleaching gases are in fluid communication with any stream between the ammonia converter and the absorption tower, such that the supply for an oxygen-rich gas comes at least partly from the bleaching gases.

In one embodiment according to the production plant of the disclosure, part of the oxygen-rich gas or part of the oxygen-containing gas or part of the tail gas, is in fluid communication with the inlet of the bleacher, such that the oxygen-rich bleaching gas is made of at least part of the oxygen-rich gas or part of the oxygen-containing gas or part of the tail gas and the means for pressurising are located in a tail gas stream, downstream the absorption tower.

In one embodiment according to the production plant of the disclosure, the oxygen-rich gas, the supply for the oxygen-rich gas and the oxygen-rich bleaching gas are all provided by a water electrolyser.

In one embodiment according to the production plant of the disclosure, the production plant further comprises a tail gas expander for expanding the second tail gas stream to atmospheric pressure, to produce an expanded tail gas, wherein the means for pressurising can be powered by the tail gas expander or by the steam turbine or by a power source.

In one embodiment according to the production plant of the disclosure, the fluid communication between the source of pressurised air and the system is in direct fluid communication with the oxygen-rich gas.

In one aspect of the disclosure, a method for producing nitric acid at reduced power consumption and reduced emissions, in a production plant according to the production plant of the disclosure, is disclosed. The method comprises the steps of:
a) supplying the pressurised air having a pressure P1 in the system;
b) inducing a pressurised air flow in the system by operating the means for pressurising (**53**) using external power;
c) supplying the ammonia gas stream to the mixing apparatus, thereby producing the ammonia/oxygen-containing gas mixture;
d) oxidising ammonia in the ammonia/oxygen-containing gas mixture in the ammonia converter at a pressure equal to or lower than P1 and a temperature ranging from 800 to 950 °C, thereby producing the gaseous NOₓ gas/steam mixture, comprising water and nitric oxide;
e) separating and condensing steam in the gas cooler/condenser, thereby generating the aqueous diluted nitric acid mixture and the gaseous NOₓ stream;
f) absorbing the gaseous NOₓ stream in the absorption tower, thereby producing the stream of raw nitric acid containing residual NOₓ gas and the tail gas comprising NOₓ gases; and
g) heating the tail gas in the tail gas heater to a temperature up to 650 °C with the gaseous NOₓ gas/steam mixture;

The method is characterised in that it further comprises the steps of:
h) pressurising a gas stream located anywhere downstream the absorption tower, or anywhere between the ammonia converter and the absorption tower, or upstream the ammonia converter in the oxygen-containing stream or in the ammonia/oxygen-containing gas mixture (**14**) in the oxygen-containing stream or in the ammonia/oxygen-containing gas mixture, with the means for pressurising;
i) mixing the first tail gas stream with the oxygen-rich gas, thereby providing the oxygen-containing gas;
j) measuring the oxygen concentration in the oxygen-containing gas;
k) if the oxygen concentration measured in step j) is such that the oxygen to ammonia molar ratio at the inlet of the ammonia converter less than 1.25, adjusting the supply of the oxygen-rich gas and being mixed in step i) or the supply of the ammonia gas stream in step c), such that the oxygen to ammonia molar ratio at the inlet of the ammonia converter is at least 1.25;
I) measuring the temperature in the ammonia converter;
m) adjusting the volume of the first tail gas stream being mixed in step i) or the supply of the ammonia gas stream supplied in step c), if the temperature measured in step I) is outside the range of 800-950 °C, such that the temperature in the ammonia converter is maintained in the range of 800-950 °C;
n) measuring the oxygen concentration in a tail gas stream downstream the absorption tower;
o) if the oxygen concentration measured in step n) is less than 0.5% by volume oxygen, adjusting the supply of the oxygen-rich gas between the ammonia converter and the absorption tower, such that the tail gas contains at least 0.5% by volume oxygen;
p) supplying the oxygen-containing gas to the mixing unit; and
q) repeating steps c) to p).

In one embodiment according to the method of the disclosure, in step h), part of the tail gas obtained from step f) is pressurised in the means for pressurising, and the method further comprises the steps of:
g') after step g) and before step h), heating the tail gas with the tail gas to be mixed in step i), in the heat exchanger, thereby bringing the tail gas to be mixed in step i) to a temperature below 300 °C;
g") treating the tail gas in the De-NOₓ treatment unit before step g) and after step g'); and r) recovering at least part of the steam generated in the ammonia converter in the steam turbine.

In one embodiment according to the method of the disclosure, the method further comprises the step of:
s) bleaching the stream of raw nitric acid containing residual NOₓ gas in the bleacher, thereby producing the bleached nitric acid.

In one embodiment according to the method of the disclosure, the method further comprises the step of:
t) supplying part of the oxygen-rich gas or part of the oxygen-containing gas obtained in step i) or part of the tail gas obtained in step g), to the inlet bleacher in step s).

In one embodiment according to the method of the disclosure, the method further comprises the steps of:
u) operating the water electrolyser, thereby producing oxygen; and
v) providing, from the oxygen produced by the water electrolyser in step u), at least the oxygen-rich gas, the supply for an oxygen-rich gas and the oxygen-rich bleaching gas.

In one embodiment according to the method of the disclosure, the method further comprises the step of:
w) expanding the second tail gas stream in the tail gas expander to atmospheric pressure, thereby producing the expanded tail gas.

In one embodiment according to the method of the disclosure, in step a), the pressurised air is supplied in the stream in direct fluid communication with the oxygen-rich gas.

In one aspect of the disclosure, the use of the production plant of the disclosure for performing the method of the disclosure, is disclosed.

In one aspect of the disclosure, a method for revamping a system for producing nitric acid, comprising:
- an air compressor for providing a compressed air stream having a pressure P1;
- a mixing apparatus downstream the oxygen-rich gas, for mixing the compressed air with an ammonia gas stream, to produce an ammonia/oxygen-containing gas mixture;
- means for adjusting the supply of the ammonia gas stream to the mixing apparatus;
- an ammonia converter operable at a pressure P1 equal to or lower than the pressure of the source of oxygen-rich gas, for oxidising ammonia in the ammonia/oxygen-containing gas mixture, to produce a NOₓ gas/steam mixture, comprising water and nitric oxide;
- means for measuring the temperature in the ammonia converter;
- a gas cooler/condenser downstream the ammonia converter, to produce an aqueous diluted nitric acid mixture and a gaseous NOₓ stream;
- an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas;
- means for measuring the concentration of oxygen in a tail gas stream downstream the absorption tower;
- a supply for an oxygen-rich gas, for supplying oxygen between the ammonia converter and the absorption tower, such that the tail gas contains at least 0.5% by volume oxygen; and
- a tail gas heater, positioned upstream from the gas cooler/condenser, for heating the tail gas coming from the absorption tower to a temperature ranging from up to 650 °C with the heat from the NOₓ gas/steam mixture coming from the ammonia converter;

into a production plant according to the production plant of the disclosure is disclosed. The method comprises the steps of:
- introducing a source of pressurised air having a pressure P1 in fluid communication with the system;
- introducing a source of an oxygen-rich gas upstream the mixing apparatus;
- introducing means for measuring the oxygen concentration in the oxygen-containing gas;
- introducing means for adjusting the concentration of oxygen in the oxygen-containing gas such that the oxygen to ammonia molar ratio at the inlet of the ammonia converter is at least 1.25;
- introducing means for pressurising a gas to a pressure P1 anywhere downstream the absorption tower, or anywhere between the ammonia converter and the absorption tower, or upstream the ammonia converter in the oxygen-containing stream or in the ammonia/oxygen-containing gas mixture;
- introducing means for splitting a stream of tail gas downstream the absorption tower into a first tail gas stream in fluid communication with the oxygen-rich gas, and a second tail gas stream;
- introducing means for adjusting the amount of tail gas being splitted into the first tail gas stream and the second tail gas stream; and removing the air compressor.

### List of Figures

**Figure 1****:** Nitric acid plant according to the prior art
**Figure 2****:** Nitric acid plant according to the disclosure

**Table of numerals**

| | |
|---|---|
| **4** | air |
| **5** | tail gas |
| **6** | outlet of nitric acid absorption tower |
| **7** | tail gas expander |
| **14** | ammonia/oxygen-enriched air mixture |
| **15** | NOₓ gas/steam mixture |
| **17** | aqueous diluted nitric acid mixture |
| **22** | gaseous NOₓ stream |
| **27** | stream of raw nitric acid containing residual NOₓ gas |
| **32** | ammonia |
| **34** | pressurised air |
| **35** | mixing apparatus |
| **36** | air compressor |
| **37** | ammonia converter operable at a pressure P1 |
| **38** | gas cooler/condenser |
| **39** | cooler/separator |
| **41** | absorption tower |
| **43** | tail gas heater |
| **50** | oxygen-rich gas |
| **51** | steam turbine |
| **52** | first tail gas stream |
| **53** | means for pressurising the tail gas stream directed to means for pressurising **53** |
| **55** | means for splitting the tail gas |
| **56** | oxygen-containing gas |
| **57** | bleacher |
| **58** | bleacher inlet for bleaching gas **60** |
| **59** | bleacher outlet for bleached nitric acid **63** |
| **60** | oxygen-rich gas bleaching gas |
| **61** | bleaching gases out of the bleacher **57** from the bleacher outlet **65** |
| **63** | bleached nitric acid |
| **64** | bleacher inlet for raw nitric acid containing residual NOₓ gas **27** |
| **65** | bleacher outlet for bleaching gases **61** |
| **66** | pressurised water electrolyser |
| **67** | supply for an oxygen-rich gas |
| **70** | expanded tail gas |
| **71** | De-NOₓ treatment unit |
| **73** | heat exchanger |
| **74** | additional tail gas stream |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

As defined herein, a pressurised oxygen-rich gas is a gas having a pressure ranging from 9 to 30 bara, preferably 15 to 30 bara, and comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, an oxygen-rich gas is a gas comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen. An oxygen-rich gas can, for example, be provided by an air separation unit or by a water electrolyser.

As defined herein, air is ambient air having atmospheric pressure. As defined herein, steam are water vapours.

### Nitric Acid Production Plant

Reference is made to Figure 2. In one aspect of the disclosure a production plant for producing nitric at reduced power consumption and reduced emissions, is disclosed. The production plant comprises a source of pressurised air **34** and is in fluid communication with a system comprising a source of an oxygen-rich gas **50**; a mixing apparatus **35** downstream the oxygen-rich gas **50**, for mixing an oxygen-containing gas **56** having a pressure P1 with an ammonia gas stream **32**, to produce an ammonia/oxygen-containing gas mixture **14**; means for measuring the oxygen concentration in the oxygen-containing gas **56**; means for adjusting the concentration of oxygen in the oxygen-containing gas **56** such that the oxygen to ammonia molar ratio at the inlet of the ammonia converter **37** is at least 1.25; means for adjusting the supply of the ammonia gas stream **32** to the mixing apparatus **35**; an ammonia converter **37** operable at a pressure P1 equal to or lower than the pressure of the source of oxygen-rich gas **50**, for oxidising ammonia in the ammonia/oxygen-containing gas mixture **14**, to produce a NOₓ gas/steam mixture **15**, comprising water and nitric oxide; means for measuring the temperature in the ammonia converter **37**; a gas cooler/condenser **38** downstream the ammonia converter **37**, to produce an aqueous diluted nitric acid mixture **17** and a gaseous NOₓ stream **22**; an absorption tower **41**, downstream the gas cooler/condenser **38**, for absorbing the NOₓ gases from the gaseous NOₓ stream **22** in water, to produce a stream of raw nitric acid containing residual NOₓ gas **27** and a tail gas **5** comprising NOₓ gases, comprising an absorption tower tail gas outlet **6** for evacuating the tail gas **5**; means for measuring the concentration of oxygen in a tail gas stream downstream the absorption tower **41**; a supply for an oxygen-rich gas **67**, for supplying oxygen between the ammonia converter **37** and the absorption tower **41**, such that the tail gas **5** contains at least 0.5% by volume oxygen; and a tail gas heater **43**, positioned upstream from the gas cooler/condenser **38**, for heating the tail gas **5** coming from the absorption tower **41** to a temperature ranging up to 650 °C with the heat from the NOₓ gas/steam mixture **15** coming from the ammonia converter **37**;

The production plant is characterised in that the system further comprises means for pressurising **53** a gas to a pressure P1, located anywhere downstream the absorption tower **41**, or anywhere between the ammonia converter **37** and the absorption tower **41**, or upstream the ammonia converter **37** in the oxygen-containing stream **56** or in the ammonia/oxygen-containing gas mixture **14**; means for splitting **55** a stream of tail gas downstream the absorption tower **41** into a first tail gas stream **52** in fluid communication with the oxygen-rich gas **50** and a second tail gas stream **74**; and means for adjusting the amount of tail gas being splitted into the first tail gas stream **52** and the second tail gas stream **74.**

Typically, P1 ranges from 2 to 16 bara. The person skilled in the art will determine the optimal percentages of oxygen in the gases entering the ammonia converter **37** and the absorption tower **41**, in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41**, he will establish weigh out the benefits of increasing the oxygen content in the absorption tower **41**, against the drawback of a higher gas volume downstream the absorption tower **41** implying equipment, such as heat exchangers, of a larger size, for heating tail gas.

As defined herein a tail gas heater is a heat exchange system comprising one or more heat exchanger units. In the case the heat exchanger is made of multiple heat exchanger units, the person skilled in the art will realise that it is possible to split the stream of tail gas downstream the absorption tower **41** inside the tail gas heater **43.**

As defined herein, a stream of tail gas is any gas stream located between the absorption tower **41** and the communication between the first tail gas stream **52** and the oxygen-rich gas **50.**

As defined herein, means for adjusting the oxygen concentration are any suitable means for assessing the amount of oxygen to be introduced in the system from a measurement of the oxygen concentration. The oxygen concentration can be determined, for example, from a measurement in the gas phase using a process gas analyser. The oxygen concentration can also be determined from computing using the concentration of the oxygen source being introduced in the system, the flow at which the source is introduced in the system, and the relative flow values of the gases with which the oxygen source is mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In particular, the means is an integrated process control system, in which the concentration of oxygen is measured, and the relevant flow of oxygen is thereby determined, thus controlling the flow of oxygen, from a gaseous source of oxygen at a pre-determined concentration.

As defined herein, means for measuring the temperature are any means suitable for measuring and indicating the temperature in the ammonia oxidation burner. In particular, the means for measuring the temperature is a thermocouple or a thermocouple or a thermometer suitable for measuring and indicating a temperature as high as 1000 °C. More in particular, the means for measuring the temperature is an infrared thermometer for measuring and indicating a temperature as high as 1000 °C.

As defined herein, means for converting steam into power are any mean for achieving power from steam. In particular those means are a steam turbine connected to an electric generator.

As defined herein, means for splitting are any means suitable for splitting any stream tail gas downstream the absorption tower **41** such as to generate, in addition to the first tail gas stream **52**, a second tail gas stream **74.** In particular, the means for splitting is a T-connection having one inlet and two outlets, such that a gas flowing through the inlet of the T-connection is splitted into two gas streams of identical chemical composition.

As defined herein, means for pressurising are any suitable means for increasing the pressure of a gas stream. In particular, the means for pressurising is a gas compressor or a gas ejector.

The person skilled in the art will realise that the means for splitting can be incorporated inside the means for pressurising, provided that the means for pressurising include at least two outlets for the gas stream being pressurised.

As defined herein, means for adjusting the amount of tail gas stream being splitted into the first tail gas stream **52** and the second tail gas stream **74,** are any means for controlling the splitting in the means for splitting **55.** In particular, the means for splitting **55** is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control means in the means for splitting **55,** thereby controlling the splitting of the tail gas **5,** in order for the measured temperature to be maintained in the range of 800-950 °C.

The inventors have found that, instead of continuously supplying pressurised air **34** provided by an air compressor **36** to the mixing unit **35** at a pressure P1, it is possible to recirculate the first tail gas stream **52** at a pressure P1. Therefore, compressed air only has to be supplied in order to start the process but no longer after the production of the tail gas has started and an air compressor **36** is not required. Due to pressure drop in the gas stream in its trajectory from the ammonia converter **37** to the outlet **6** of the absorption tower **41**, the tail gas **5** has a pressure lower than P1 and, therefore, the means for pressurising **53** provide a pressure P1 to the first tail gas stream **10.** In addition, the oxygen-rich gas **50** having a pressure P1 and the supply for an oxygen-rich gas **67** respectively provide oxygen to the ammonia converter **37** and to the absorption tower **41**, such that, in the absence of the primary and secondary air provided by the air compressor **36**, the amount of oxygen in the ammonia converter **37** and in the absorption tower **41** is similar to that in a standard mono pressure nitric acid plant.

In the absence of an air compressor **36** and with the additional tail gas stream **10** being recirculated in the system, not only is the power demand of the system reduced: the NOₓ emissions leaving the system are also reduced. Therefore, the size of the treatment unit for treating those NOₓ emissions is reduced with respect to the size in the corresponding standard mono pressure nitric acid plant.

In one embodiment according to the production plant of the disclosure, the system further comprises a heat exchanger **73**, for exchanging heat between the tail gas 5 and the stream of tail gas exiting the heat heater **43**, wherein the stream of tail gas having exchanged heat with the tail gas **5** is splitted in the means for splitting **55** downstream the heat exchanger **73** and wherein the means for pressurising **53** are located upstream the heat exchanger **73**; a De-NOₓ treatment unit **71**; and a steam turbine **51**, wherein the steam turbine can at least partly power the means for pressurising **53.**

Advantageously, the means for splitting **55** are located downstream the tail gas heater **43.** Indeed, both the first tail gas stream **52** and the second tail gas stream **52** are then at an optimal temperature. This means that the first stream of tail gas **52** is at a temperature below 300 °C, such that the first tail gas stream **52** can be fed to the ammonia converter **37** without the amount of ammonia fed through the stream **32**, having to be adjusted in order to maintain the temperature ranging from 800 to 950 °C and at which the ammonia **37** is operable, in the ammonia converter **37.** In addition, the location of the means for splitting **55** at this location confers to the second tail gas stream **74** an optimal temperature for being expanded in the tail gas expander **7** such as to provide an optimal of energy which can be used to power the means for pressurising **53.** Further, the presence of a steam turbine **51** allows for the recovery of the heat of the steam produced in the ammonia converter **37** and this recovered heat can be used, at least partly, for powering the means for pressurising **53.** Finally, the use of the steam turbine **51** and the location of the means for pressurising upstream the heat exchanger **73** contribute to operating the production plant in an energy-efficient manner. Indeed, less power is required for the means for pressurising **53** to pressurise a stream of tail gas before it is heated by the heat exchanger **73.**

In particular, the tail gas **5** is heated in the heat exchanger **73** from a temperature ranging from 20 to 250 °C, to a temperature ranging from 100 to 450 °C. Subsequently, the tail gas exiting the heat exchanger **73** is heated in the tail gas heater **43** to a temperature ranging from 200 to 550 °C. The tail gas exiting the heat exchanger **73** then is at an optimal temperature for being treated in the De-NOₓ treatment unit **71** and, therefore, the De-NOₓ treatment unit **71** is located between the heat exchanger **73** and the tail gas heater **43.** The person skilled in the art will, without any difficulty, select the proper location for the De-NOₓ treatment unit **71** such that the operating temperature of the De-NOₓ treatment unit **71** is in agreement with the temperature of the corresponding stream of tail gas.

In one embodiment according to the production plant of the disclosure, the production plant further comprises a bleacher **57** comprising an inlet **58** for an oxygen-rich bleaching gas **60**, an inlet **64** for the stream of raw nitric acid containing residual NOₓ gas **27**, an outlet **59** for bleached nitric acid **63** and an outlet **65** for bleaching gases **61**, and the bleaching gases **61** are in fluid communication with any stream between the ammonia converter **37** and the absorption tower **41**, such that the supply for an oxygen-rich gas **67** comes at least partly from the bleaching gases **61.**

The person skilled in the art will understand that the pressure of the bleaching gases **61** is to be adjusted to about P1 before joining the gaseous NOₓ stream **22.** When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching gases **61** is the oxygen-rich gas supplied by the corresponding source **67**: the supply of the oxygen-rich gas **67** is achieved through the bleacher **57** and no separate source of oxygen is required.

In one embodiment according to the production plant of the disclosure, part of the oxygen-rich gas **50** or part of the oxygen-containing gas **56** or part of the tail gas **5**, is in fluid communication with the inlet **58** of the bleacher **57**, such that the oxygen-rich bleaching gas **60** is made of at least part of the oxygen-rich gas **50** or part of the oxygen-containing gas **56** or part of the tail gas **5** and the means for pressurising **53** are located in a tail gas stream, downstream the absorption tower **41.**

If a bleacher **57** is present, as no secondary air is fed by an air compressor (**36** in the standard nitric acid plant) to the bleacher **57**, the bleacher can be conveniently fed by the oxygen-rich gas **50.** Also, once tail gas **5** is produced and recirculated, part of the oxygen-containing gas **56** or part of the tail gas **5** can be fed to the bleacher **57**: the concentration of NOₓ gases in the oxygen-containing gas **56** or in the tail gas **5** is sufficiently low that the bleaching in the bleacher **57** remains sufficiently efficient. The means for pressurising **53** being located in a tail gas stream, downstream the absorption tower **41**, it is ensured that the oxygen-rich bleaching gas **60** has a pressure about P1.

In one embodiment according to the production plant of the disclosure, the oxygen-rich gas **50**, the supply for the oxygen-rich gas **67** and the oxygen-rich bleaching gas **60** are all provided by a water electrolyser **66.**

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high-pressure water electrolyser may comprise an anode producing oxygen gas according to the reaction

2 OH- = H₂O + ½ O₂ + 2 e-;

a cathode, producing hydrogen gas according to the reaction

2 H₂O + 2 e- = H₂ + 2 OH-;

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture.

The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the standard potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. The electrolyser may be operated at a temperature of 50 to 80 °C, or 60 to 80 °C, and a gas pressure of 2 bara, preferably 9 to 30 bara, even more preferably 15 to 30 bara.

A high-pressure water electrolyser hence results in the production of pressurised hydrogen at the cathode and pressurised oxygen at the anode. What is required to perform high-pressure electrolysis is to pressurize the water used in the electrolysis process. As pressurising water requires less power than pressuring a gas, the use of a high-pressure water electrolyser results in the production of pressurised oxygen-rich gas at minimized power consumption.

Conveniently, the water electrolyser 66 provides oxygen to all the various points where oxygen needs to be fed. In this manner, the system is simplified and comprises a single source of oxygen from which oxygen-containing gas streams can be produced.

In one embodiment according to the production plant of the disclosure, the production plant further comprises a tail gas expander **7** for expanding the second tail gas stream **74** to atmospheric pressure, to produce an expanded tail gas **70**, wherein the means for pressurising **53** can be powered by the tail gas expander **7** or by the steam turbine **51** or by a power source.

In the presence of such tail gas expander **7**, the second tail gas stream **74** can be expanded, thereby providing power that can be used for the means for pressurising **53.**

In one embodiment according to the production plant of the disclosure, the fluid communication between the source of pressurised air **34** and the system is in direct fluid communication with the oxygen-rich gas **50.**

It is preferred to introduce pressurised air **34** through a direct fluid communication with the oxygen-rich gas **50.** In this manner, upon operating the means for pressurising during the start-up of the system, it is ensured that air flows through the converter **37** when ammonia **32** is being fed to converter **37**, such that there is a sufficient amount of oxygen to convert ammonia into nitric oxide. Subsequently, the nitric acid process being induced, tail gas **5** and the first stream of tail gas **52** can be produced and recirculated to the mixing unit **35**, upon feeding the oxygen-rich gas **50.**

### Method For Producing Nitric Acid

In one aspect of the disclosure, a method for producing nitric acid at reduced power consumption and reduced emissions, in a production plant according to the production plant of the disclosure, is disclosed. The method comprises the steps of a) supplying the pressurised air having a pressure P1 **34** in the system; b) inducing a pressurised air flow in the system by operating the means for pressurising **53** using external power; c) supplying the ammonia gas stream **32** to the mixing apparatus **35**, thereby producing the ammonia/oxygen-containing gas mixture **14**; d) oxidising ammonia in the ammonia/oxygen-containing gas mixture **14** in the ammonia converter **37** at a pressure equal to or lower than P1 and a temperature ranging from 800 to 950 °C, thereby producing the gaseous NOₓ gas/steam mixture **15**, comprising water and nitric oxide; e) separating and condensing steam in the gas cooler/condenser **38**, thereby generating the aqueous diluted nitric acid mixture **17** and the gaseous NOₓ stream **22**; f) absorbing the gaseous NOₓ stream **22** in the absorption tower **41**, thereby producing the stream of raw nitric acid containing residual NOₓ gas **27** and the tail gas **5** comprising NOₓ gases; and g) heating the tail gas **5** in the tail gas heater **43** to a temperature ranging up to 650 °C with the gaseous NOₓ gas/steam mixture **15**;

The method is characterised in that it further comprises the steps of h) pressurising a gas stream located anywhere downstream the absorption tower **41**, or anywhere between the ammonia converter **37** and the absorption tower **41**, or upstream the ammonia converter **37** in the oxygen-containing stream **56** or in the ammonia/oxygen-containing gas mixture **14**, with the means for pressurising **53**; i) mixing the first tail gas stream **52** with the oxygen-rich gas **50**, thereby providing the oxygen-containing gas **56**; j) measuring the oxygen concentration in the oxygen-containing gas **56**; k) if the oxygen concentration measured in step j) is such that the oxygen to ammonia molar ratio at the inlet of the ammonia converter **37** less than 1.25, adjusting the supply of the oxygen-rich gas **50** and being mixed in step i) or the supply of the ammonia gas stream **32** in step c), such that the oxygen to ammonia molar ratio at the inlet of the ammonia converter **37** is at least 1.25; I) measuring the temperature in the ammonia converter **37**; m) adjusting the volume of the first tail gas stream **52** being mixed in step i) or the supply of the ammonia gas stream **32** supplied in step c), if the temperature measured in step I) is outside the range of 800-950 °C, such that the temperature in the ammonia converter is maintained in the range of 800-950 °C; n) measuring the oxygen concentration in a tail gas stream downstream the absorption tower **41**; o) if the oxygen concentration measured in step n) is less than 0.5% by volume oxygen, adjusting the supply of the oxygen-rich gas **67** between the ammonia converter **37** and the absorption tower **41**, such that the tail gas **5** contains at least 0.5% by volume oxygen; p) supplying the oxygen-containing gas **56** to the mixing unit **35**; and q) repeating steps c) to p).

Typically, P1 ranges from 2 to 16 bara. The person skilled in the art will determine the optimal percentages of oxygen in the gases entering the ammonia converter **37** and the absorption tower **41**, in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41**, he will establish weigh out the benefits of increasing the oxygen content in the absorption tower **41**, against the drawback of a higher gas volume downstream the absorption tower **41** implying equipment, such as heat exchangers, of a larger size, for heating tail gas.

The inventors have found that, instead of continuously supplying pressurised air **34** provided by an air compressor **36** to the mixing unit **35** at a pressure P1, it is possible to recirculate the first tail gas stream **52** at a pressure P1. Therefore, compressed air only has to be supplied in order to start the process but no longer after the production of the tail gas has started and an air compressor **36** is not required. Due to pressure drop in the gas stream in its trajectory from the ammonia converter **37** to the outlet **6** of the absorption tower **41**, the tail gas **5** has a pressure lower than P1 and, therefore, the means for pressurising **53** provide a pressure P1 to the first tail gas stream **10.** In addition, the oxygen-rich gas **50** having a pressure P1 and the supply for an oxygen-rich gas **67** respectively provide oxygen to the ammonia converter **37** and to the absorption tower **41**, such that, in the absence of the primary and secondary air provided by the air compressor **36**, the amount of oxygen in the ammonia converter **37** and in the absorption tower **41** is similar to that in a standard mono pressure nitric acid plant.

In the absence of an air compressor **36** and with the additional tail gas stream **10** being recirculated in the system, not only is the power demand of the system reduced: the NOₓ emissions leaving the system are also reduced. Therefore, the size of the treatment unit for treating those NOₓ emissions is reduced with respect to the size in the corresponding standard mono pressure nitric acid plant.

In one embodiment according to the method of the disclosure, in step h), part of the tail gas obtained from step f) is pressurised in the means for pressurising **53**, and the method further comprises the steps of g') after step g) and before step h), heating the tail gas **5** with the tail gas to be mixed in step i), in the heat exchanger **73**, thereby bringing the tail gas to be mixed in step i) to a temperature below 300 °C; g") treating the tail gas **5** in the De-NOₓ treatment unit **71** before step g) and after step g'); and r) recovering at least part of the steam generated in the ammonia converter **37** in the steam turbine **51.**

Advantageously, the means for splitting **55** are located downstream the tail gas heater **43.** Indeed, both the first tail gas stream **52** and the second tail gas stream **52** are then at an optimal temperature. This means that the first stream of tail gas **52** is at a temperature below 300 °C, such that the first tail gas stream **52** can be fed to the ammonia converter **37** without the amount of ammonia fed through the stream **32**, having to be adjusted in order to maintain the temperature ranging from 800 to 950 °C and at which the ammonia **37** is operable, in the ammonia converter **37.** In addition, the location of the means for splitting **55** at this location confers to the second tail gas stream **74** an optimal temperature for being expanded in the tail gas expander **7** such as to provide an optimal of energy which can be used to power the means for pressurising **53.** Further, the presence of a steam turbine **51** allows for the recovery of the heat of the steam produced in the ammonia converter **37** and this recovered heat can be used, at least partly, for powering the means for pressurising **53.** Finally, the use of the steam turbine **51** and the location of the means for pressurising upstream the heat exchanger **73** contribute to operating the production plant in an energy-efficient manner. Indeed, less power is required for the means for pressurising **53** to pressurise a stream of tail gas before it is heated by the heat exchanger **73.**

In particular, the tail gas **5** is heated in the heat exchanger **73** from a temperature ranging from 20 to 250 °C, to a temperature ranging from 100 to 450 °C. Subsequently, the tail gas exiting the heat exchanger **73** is heated in the tail gas heater **43** to a temperature ranging from 200 to 550 °C. The tail gas exiting the heat exchanger **73** then is at an optimal temperature for being treated in the De-NOₓ treatment unit **71** and, therefore, the De-NOₓ treatment unit **71** is located between the heat exchanger **73** and the tail gas heater **43.** The person skilled in the art will, without any difficulty, select the proper location for the De-NOₓ treatment unit **71** such that the operating temperature of the De-NOₓ treatment unit **71** is in agreement with the temperature of the corresponding stream of tail gas.

In one embodiment according to the method of the disclosure, the method further comprises the step of s) bleaching the stream of raw nitric acid containing residual NOₓ gas **27** in the bleacher **57**, thereby producing the bleached nitric acid **63.**

The person skilled in the art will understand that the pressure of the bleaching gases **61** is to be adjusted to about P1 before joining the gaseous NOₓ stream **22.** When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching gases **61** is the oxygen-rich gas supplied by the corresponding source **67:** the supply of the oxygen-rich gas **67** is achieved through the bleacher **57** and no separate source of oxygen is required.

If such bleaching step s) is performed, as no secondary air is fed by an air compressor (**36** in the standard nitric acid plant) to the bleacher **57**, the bleacher can be conveniently fed by the oxygen-rich gas **50.** Also, once tail gas **5** is produced and recirculated, the oxygen-containing gas **56** or the tail gas **5** can be fed to the bleacher **57**: the concentration of NOₓ gases in the oxygen-containing gas **56** or the tail gas **5** is sufficiently low that the bleaching in the bleacher **57** remains sufficiently efficient.

In one embodiment according to the method of the disclosure, the method further comprises the step of t) supplying part of the oxygen-rich gas **50** or part of the oxygen-containing gas **56** obtained in step i) or part of the tail gas **5** obtained in step g), to the inlet **58** bleacher **57** in step s).

In one embodiment according to the method of the disclosure, the method further comprises the steps of u) operating the water electrolyser **66**, thereby producing oxygen; and v) providing, from the oxygen produced by the water electrolyser **66** in step u), at least the oxygen-rich gas **50**, the supply for an oxygen-rich gas **67** and the oxygen-rich bleaching gas **60.**

Conveniently, the water electrolyser **66** is operated and provides oxygen to all the various points where oxygen needs to be fed. In this manner, oxygen gas is produced and supplied from a single source, from which the oxygen-rich gas **50**, the supply for an oxygen-rich gas **67** and the oxygen-rich bleaching gas **60** can be obtained. Furthermore, as pressurising water requires less power than pressuring a gas, the use of a high-pressure water electrolyser results in the production of pressurised oxygen-rich gas at minimized power consumption.

Conveniently, the water electrolyser **66** provides oxygen to all the various points where oxygen needs to be fed. In this manner, the system is simplified and comprises a single source of oxygen from which oxygen-containing gas streams can be produced.

In one embodiment according to the method of the disclosure, the method further comprises the step of w) expanding the second tail gas stream **74** in the tail gas expander 7 to atmospheric pressure, thereby producing the expanded tail gas **70.**

In the presence of such tail gas expander **7**, the second tail gas stream **74** can be expanded, thereby providing power that can be used for the means for pressurising **53.**

In one embodiment according to the method of the disclosure, in step a), the pressurised air **34** is supplied in the stream in direct fluid communication with the oxygen-rich gas **50.**

It is preferred to introduce pressurised air **34** through a direct fluid communication with the oxygen-rich gas **50.** In this manner, upon operating the means for pressurising during the start-up of the system, it is ensured that air flows through the converter **37** when ammonia **32** is being fed to converter **37**, such that there is a sufficient amount of oxygen to convert ammonia into nitric oxide. Subsequently, the nitric acid process being induced, tail gas **5** and the first stream of tail gas **52** can be produced and recirculated to the mixing unit **35**, upon feeding the oxygen-rich gas **50.**

### Use Of the Production Plant Of The Disclosure

In one aspect of the disclosure, the use of the production plant of the disclosure for performing the method of the disclosure, is disclosed.

### Method For Revamping A Nitric Acid Production Plant

In one aspect of the disclosure, a method for revamping a system for producing nitric acid, comprising an air compressor **36** for providing a compressed air stream having a pressure P1 **34**; a mixing apparatus **35** downstream the oxygen-rich gas **50**, for mixing the compressed air with an ammonia gas stream **32**, to produce an ammonia/oxygen-containing gas mixture **14**; means for adjusting the supply of the ammonia gas stream **32** to the mixing apparatus **35**; an ammonia converter **37** operable at a pressure P1 equal to or lower than the pressure of the source of oxygen-rich gas **50**, for oxidising ammonia in the ammonia/oxygen-containing gas mixture **14**, to produce a NOₓ gas/steam mixture **15**, comprising water and nitric oxide; means for measuring the temperature in the ammonia converter **37**; a gas cooler/condenser **38** downstream the ammonia converter **37**, to produce an aqueous diluted nitric acid mixture **17** and a gaseous NOₓ stream **22**; an absorption tower **41**, downstream the gas cooler/condenser **38**, for absorbing the NOₓ gases from the gaseous NOₓ stream **22** in water, to produce a stream of raw nitric acid containing residual NOₓ gas **27** and a tail gas **5** comprising NOₓ gases, comprising an absorption tower tail gas outlet **6** for evacuating the tail gas **5**; means for measuring the concentration of oxygen in a tail gas stream downstream the absorption tower **41**; a supply for an oxygen-rich gas **67**, for supplying oxygen between the ammonia converter **37** and the absorption tower **41**, such that the tail gas **5** contains at least 0.5% by volume oxygen; and a tail gas heater **43**, positioned upstream from the gas cooler/condenser **38**, for heating the tail gas **5** coming from the absorption tower **41** to a temperature up to 650 °C with the heat from the NOₓ gas/steam mixture **15** coming from the ammonia converter **37**; into a production plant according to the production plant of the disclosure is disclosed.

The method comprises the steps of introducing a source of pressurised air having a pressure P1 **34** in fluid communication with the system; introducing a source of an oxygen-rich gas **50** upstream the mixing apparatus **35**; introducing means for measuring the oxygen concentration in the oxygen-containing gas **56**; introducing means for adjusting the concentration of oxygen in the oxygen-containing gas **56** such that the oxygen to ammonia molar ratio at the inlet of the ammonia converter **37** is at least 1.25; introducing means for pressurising **53** a gas to a pressure P1 anywhere downstream the absorption tower **41**, or anywhere between the ammonia converter **37** and the absorption tower **41**, or upstream the ammonia converter **37** in the oxygen-containing stream **56** or in the ammonia/oxygen-containing gas mixture **14**; introducing means for splitting **55** a stream of tail gas downstream the absorption tower **41** into a first tail gas stream **52** in fluid communication with the oxygen-rich gas **50**, and a second tail gas stream **74**; introducing means for adjusting the amount of tail gas being splitted into the first tail gas stream **52** and the second tail gas stream **74**; and removing the air compressor **36.**

Typically, P1 ranges from 2 to 16 bara. The person skilled in the art will determine the optimal percentages of oxygen in the gases entering the ammonia converter **37** and the absorption tower **41**, in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41**, he will establish weigh out the benefits of increasing the oxygen content in the absorption tower **41**, against the drawback of a higher gas volume downstream the absorption tower **41** implying equipment, such as heat exchangers, of a larger size, for heating tail gas.

As defined herein a tail gas heater is a heat exchange system comprising one or more heat exchanger units. In the case the heat exchanger is made of multiple heat exchanger units, the person skilled in the art will realise that it is possible to split the stream of tail gas downstream the absorption tower **41** inside the tail gas heater **43.**

As defined herein, a stream of tail gas is any gas stream located between the absorption tower **41** and the communication between the first tail gas stream **52** and the oxygen-rich gas **50.**

As defined herein, means for adjusting the oxygen concentration are any suitable means for assessing the amount of oxygen to be introduced in the system from a measurement of the oxygen concentration. The oxygen concentration can be determined, for example, from a measurement in the gas phase using a process gas analyser. The oxygen concentration can also be determined from computing using the concentration of the oxygen source being introduced in the system, the flow at which the source is introduced in the system, and the relative flow values of the gases with which the oxygen source is mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In particular, the means is an integrated process control system, in which the concentration of oxygen is measured, and the relevant flow of oxygen is thereby determined, thus controlling the flow of oxygen, from a gaseous source of oxygen at a pre-determined concentration.

As defined herein, means for measuring the temperature are any means suitable for measuring and indicating the temperature in the ammonia oxidation burner. In particular, the means for measuring the temperature is a thermocouple or a thermocouple or a thermometer suitable for measuring and indicating a temperature as high as 1000 °C. More in particular, the means for measuring the temperature is an infrared thermometer for measuring and indicating a temperature as high as 1000 °C.

As defined herein, means for converting steam into power are any mean for achieving power from steam. In particular those means are a steam turbine connected to an electric generator.

As defined herein, means for splitting are any means suitable for splitting any stream tail gas downstream the absorption tower **41** such as to generate, in addition to the first tail gas stream **52**, a second tail gas stream **74.** In particular, the means for splitting is a T-connection having one inlet and two outlets, such that a gas flowing through the inlet of the T-connection is splitted into two gas streams of identical chemical composition.

As defined herein, means for pressurising are any suitable means for increasing the pressure of a gas stream. In particular, the means for pressurising is a gas compressor or a gas ejector.

As defined herein, means for adjusting the amount of tail gas stream being splitted into the first tail gas stream **52** and the second tail gas stream **74**, are any means for controlling the splitting in the means for splitting **55.** In particular, the means for splitting **55** is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control means in the means for splitting **55**, thereby controlling the splitting of the tail gas 5, in order for the measured temperature to be maintained in the range of 800-950 °C.

### Examples

### 1. Recirculation of tail-gas at 99%

Reference is made to Figure 2. Ammonia **32** was mixed with compressed air **34** in a mixing apparatus **35.** The resulting ammonia/compressed air mixture **14** was fed to an ammonia converter **37**, at a temperature ranging from 800 to 950 °C and operating at a pressure of 8 bara. The oxygen to ammonia molar ratio at the inlet of the ammonia converter **37** was at least 1.25. In the ammonia converter **37**, ammonia was oxidized over a mixed platinum/rhodium catalyst, thus obtaining a NOₓ gas/steam mixture **15**, comprising water and nitric oxide (NO). The heat of the mixture coming out of the ammonia converter was recovered by producing steam for export to a steam grid, for supplying the steam turbine **51**, and also for heating the tail gas **5** as will be described below. The NOₓ gas/stream mixture was subsequently cooled down in heat exchangers (not shown) and in a gas cooler/condenser **38** to a temperature where the water condenses, and an aqueous diluted nitric acid mixture **17** was separated from a gaseous NOₓ stream **22.** The aqueous diluted nitric acid mixture **17** was directed to an absorption tower **41.** The gaseous NOₓ stream **22** was sent to the absorber unit **6** too. Inside the absorber unit **6**, the NOₓ gas reacted with water to produce the tail and a stream of raw nitric acid also containing residual NOₓ gas, which was fed to a bleacher **57.** The oxygen content in the tail gas **5** was maintained at 3% using the bleaching gases **61** of the bleacher **57**, supplied downstream the ammonia converter **37** and upstream the absorption tower **41.** The tail gas stream **5** was pressurised using a gas compressor **53**, thereby producing a pressurised tail gas. The pressurised tail gas was consecutively heated in a heat exchanger **73**, treated in a De-NOx unit **71** and then heated in the tail gas heater **43** to 460 °C, using the heat from the gaseous NOₓ stream **15**, thereby producing a pressurised and heated tail gas. The pressurised and heated tail gas was used for heating the pressurised tail gas in the heat exchanger **73** and splitted over a T-tube **55**, such that 99% of the tail gas stream was splitted, into a first tail gas stream **52** and an additional tail gas stream **74.** The first tail gas stream **52** was mixed with an oxygen-rich gas **50** having a pressure of 9 bara, thereby providing an oxygen-containing gas **56** in the absence of further pressurised air **34** being supplied, such that additional tail gas **5** could be produced in the absence of an air compressor, and pressurised, heated, splitted and recirculated to the ammonia converter **37**, together with the oxygen-rich gas **50.** The amount of the oxygen-rich gas **50** fed to the process was controlled in order to ensure that the oxygen to ammonia molar ratio at the inlet of the ammonia converter **37** was measured and, in case it was lower than 1.25, the amount of the oxygen-rich gas **50** was adjusted, such that the oxygen to ammonia molar ratio at the inlet of the ammonia converter **37** was at least 1.25. The temperature inside the ammonia converter **37** was measured and established to have remained in the range of 800 to 950 °C. The second tail gas stream **74** was sent to the tail gas expander **7.** The residual NOₓ gas in the raw nitric acid stream **27** was then stripped out with a gaseous medium **60** such as an oxygen-containing gas or air, inside the bleacher unit **57**; the bleacher unit was generally operated at about the same pressure as the ammonia converter of 8 bara. The drive power for the gas compressor **53** originated from the tail gas expander **7** and the steam turbine **51.** The net power associated to the compressor **53** was 30 kWh/t 100% HNO₃. This power was provided by the steam turbine **51** and was provided by the tail gas expander **7** or the steam turbine **51** or an electrical motor. The specific steam export amounts to 1300 to 1500 kg / t nitric acid, which compares to a specific steam export of 200 to 600 kg / t nitric acid in a conventional mono pressure nitric acid production plant.

### 2. Comparative example: recirculation of tail-gas at 76%

Reference is made to Figure 2. Ammonia **32** was mixed with compressed air **34** in a mixing apparatus **35.** The resulting ammonia/compressed air mixture **14** was fed to an ammonia converter **37**, at a temperature ranging from 800 to 950 °C and operating at a pressure of 8 bara. The oxygen to ammonia molar ratio at the inlet of the ammonia converter **37** was at least 1.25. In the ammonia converter **37**, ammonia was oxidized over a mixed platinum/rhodium catalyst, thus obtaining a NOₓ gas/steam mixture **15**, comprising water and nitric oxide (NO). The heat of the mixture coming out of the ammonia converter was recovered by producing steam for export to a steam grid, for supplying the steam turbine **51**, and also for heating the tail gas **5** as will be described below. The NOₓ gas/stream mixture was subsequently cooled down in heat exchangers (not shown) and in a gas cooler/condenser **38** to a temperature where the water condenses, and an aqueous diluted nitric acid mixture **17** was separated from a gaseous NOₓ stream **22.** The aqueous diluted nitric acid mixture **17** was directed to an absorption tower **41.** The gaseous NOₓ stream **22** was sent to the absorber unit **6** too. Inside the absorber unit **6**, the NOₓ gas reacted with water to produce the tail and a stream of raw nitric acid also containing residual NOₓ gas, which was fed to a bleacher **57.** The oxygen content in the tail gas **5** was maintained at 3% using the bleaching gases **61** of the bleacher **57**, supplied downstream the ammonia converter **37** and upstream the absorption tower **41.** The tail gas stream **5** was pressurised using a gas compressor **53**, thereby producing a pressurised tail gas. The pressurised tail gas was consecutively heated in a heat exchanger **73**, treated in a De-NOx unit **71** and then heated in the tail gas heater **43** to 460 °C, using the heat from the gaseous NOₓ stream **15**, thereby producing a pressurised and heated tail gas. The pressurised and heated tail gas was used for heating the pressurised tail gas in the heat exchanger **73** and splitted over a T-tube **55**, such that 76% of the tail gas stream was splitted, into a first tail gas stream **52** and an additional tail gas stream **74.** The first tail gas stream **52** was mixed with oxygen-rich gas **50** having a pressure of 9 bara, thereby providing an oxygen-containing gas **56** in the absence of further pressurised air **34** being supplied, such that additional tail gas **5** could be produced in the absence of an air compressor, and pressurised, heated, splitted and recirculated to the ammonia converter **37**, together with an oxygen-rich gas **50.** The amount of the oxygen-rich gas **50** fed to the process was controlled in order to ensure that the oxygen to ammonia molar ratio at the inlet of the ammonia converter **37** was measured and, in case it was lower than 1.25, the amount of the oxygen-rich gas **50** was adjusted, such that the oxygen to ammonia molar ratio at the inlet of the ammonia converter **37** was at least 1.25. The temperature inside the ammonia converter **37** was measured and established to have remained in the range of 800 to 950 °C. The second tail gas stream **74** was sent to the tail gas expander **7.** The residual NOₓ gas in the raw nitric acid stream **27** was then stripped out with a gaseous medium **60** such as an oxygen-containing gas or air, inside the bleacher unit **57**; the bleacher unit was generally operated at about the same pressure as the ammonia converter of 8 bara. The drive power for the gas compressor **53** originated from the tail gas expander **7** and the steam turbine **51.** The net power associated to the compressor **53** was -19.6 kWh/t 100% HNO₃. This power was provided by the steam turbine **51** and was provided by the tail gas expander **7** or the steam turbine **51** or an electrical motor. The specific steam export amounts to 1500 to 1700 kg / t nitric acid, which compares to a specific steam export of 200 to 600 kg / t nitric acid in a conventional mono pressure nitric acid production plant.

## Claims

1. A production plant for producing nitric acid at reduced power consumption and reduced emissions, comprising a source of pressurised air (**34**) in fluid communication with a system comprising:
• a source of an oxygen-rich gas (**50**);
• a mixing apparatus (**35**) downstream the oxygen-rich gas (**50**), for mixing an oxygen-containing gas (**56**) having a pressure P1 with an ammonia gas stream (**32**), to produce an ammonia/oxygen-containing gas mixture (**14**);
• means for measuring the oxygen concentration in the oxygen-containing gas (**56**);
• means for adjusting the concentration of oxygen in the oxygen-containing gas (**56**) such that the oxygen to ammonia molar ratio at the inlet of the ammonia converter (**37**) is at least 1.25;
• means for adjusting the supply of the ammonia gas stream (**32**) to the mixing apparatus (**35**);
• an ammonia converter (**37**) operable at a pressure P1 equal to or lower than the pressure of the source of oxygen-rich gas (**50**), for oxidising ammonia in the ammonia/oxygen-containing gas mixture (**14**), to produce a NOₓ gas/steam mixture (**15**), comprising water and nitric oxide;
• means for measuring the temperature in the ammonia converter (**37**);
• a gas cooler/condenser (**38**) downstream the ammonia converter (**37**), to produce an aqueous diluted nitric acid mixture (**17**) and a gaseous NOₓ stream (**22**);
• an absorption tower (**41**), downstream the gas cooler/condenser (**38**), for absorbing the NOₓ gases from the gaseous NOₓ stream (**22**) in water, to produce a stream of raw nitric acid containing residual NOₓ gas (**27**) and a tail gas (**5**) comprising NOₓ gases, comprising an absorption tower tail gas outlet (**6**) for evacuating the tail gas (**5**);
• means for measuring the concentration of oxygen in a tail gas stream downstream the absorption tower (**41**);
• a supply for an oxygen-rich gas (**67**), for supplying oxygen between the ammonia converter (**37**) and the absorption tower (**41**), such that the tail gas (**5**) contains at least 0.5% by volume oxygen; and
• a tail gas heater (**43**), positioned upstream from the gas cooler/condenser (**38**), for heating the tail gas (**5**) coming from the absorption tower (**41**) to a temperature up to 650 °C with the heat from the NOₓ gas/steam mixture (**15**) coming from the ammonia converter (**37**);
**characterised in that** the system further comprises:
• means for pressurising (**53**) a gas to a pressure P1, located anywhere downstream the absorption tower (**41**), or anywhere between the ammonia converter (**37**) and the absorption tower (**41**), or upstream the ammonia converter (**37**) in the oxygen-containing stream (**56**) or in the ammonia/oxygen-containing gas mixture (**14**);
• means for splitting (**55**) a stream of tail gas downstream the absorption tower (**41**) into a first tail gas stream (**52**) in fluid communication with the oxygen-rich gas (**50**) and a second tail gas stream (**74**); and
• means for adjusting the amount of tail gas being splitted into the first tail gas stream (**52**) and the second tail gas stream (**74**).

2. The production plant according to claim 1, wherein the system further comprises:
• a heat exchanger (**73**), for exchanging heat between the tail gas (**5**) and the stream of tail gas exiting the heat heater (**43**), wherein the stream of tail gas having exchanged heat with the tail gas (**5**) is splitted in the means for splitting (**55**) downstream the heat exchanger (**73**), and wherein the means for pressurising are located upstream the heat exchanger (**73**);
• a De-NOₓ treatment unit (**71**); and
• a steam turbine (**51**), wherein the steam turbine can at least partly power the means for pressurising (**53**).

3. The production plant according to any one of claims 1 to 2, further comprising a bleacher (**57**) comprising an inlet (**58**) for an oxygen-rich bleaching gas (**60**), an inlet (**64**) for the stream of raw nitric acid containing residual NOₓ gas (**27**), an outlet (**59**) for bleached nitric acid (**63**) and an outlet (**65**) for bleaching gases (**61**), and wherein the bleaching gases (**61**) are in fluid communication with any stream between the ammonia converter (**37**) and the absorption tower (**41**), such that the supply for an oxygen-rich gas (**67**) comes at least partly from the bleaching gases (**61**).

4. The production plant according to claim 3, wherein part of the oxygen-rich gas (**50**) or part of the oxygen-containing gas (**56**) or part of the tail gas (**5**), is in fluid communication with the inlet (**58**) of the bleacher (**57**), such that the oxygen-rich bleaching gas (**60**) is made of at least part of the oxygen-rich gas (**50**) or part of the oxygen-containing gas (**56**) or part of the tail gas (**5**), and wherein the means for pressurising (**53**) are located in a tail gas stream, downstream the absorption tower (**41**).

5. The production plant according to any one of claims 1 to 4, wherein the oxygen-rich gas (**50**), the supply for the oxygen-rich gas (**67**) and the oxygen-rich bleaching gas (**60**) are all provided by a water electrolyser (**66**).

6. The production plant according to any one of claims 1 to 5, further comprising a tail gas expander (**7**) for expanding the second tail gas stream (**74**) to atmospheric pressure, to produce an expanded tail gas (**70**), wherein the means for pressurising (**53**) can be powered by the tail gas expander (**7**) or by the steam turbine (**51**) or by a power source.

7. The production plant according to any one of claims 1 to 6, wherein the fluid communication between the source of pressurised air (**34**) and the system is in direct fluid communication with the oxygen-rich gas (**50**).

8. A method for producing nitric acid at reduced power consumption and reduced emissions, in a production plant according to any one of claims 1 to 7, comprising the steps of:
a) supplying the pressurised air having a pressure P1 (**34**) in the system;
b) inducing a pressurised air flow in the system by operating the means for pressurising (**53**) using external power;
c) supplying the ammonia gas stream (**32**) to the mixing apparatus (**35**), thereby producing the ammonia/oxygen-containing gas mixture (**14**);
d) oxidising ammonia in the ammonia/oxygen-containing gas mixture (**14**) in the ammonia converter (**37**) at a pressure equal to or lower than P1 and a temperature ranging from 800 to 950 °C, thereby producing the gaseous NOₓ gas/steam mixture (**15**), comprising water and nitric oxide;
e) separating and condensing steam in the gas cooler/condenser (**38**), thereby generating the aqueous diluted nitric acid mixture (**17**) and the gaseous NOₓ stream (**22**);
f) absorbing the gaseous NOₓ stream (**22**) in the absorption tower (**41**), thereby producing the stream of raw nitric acid containing residual NOₓ gas (**27**) and the tail gas (**5**) comprising NOₓ gases; and
g) heating the tail gas (**5**) in the tail gas heater (**43**) to a temperature up to 650 °C with the gaseous NOₓ gas/steam mixture (**15**);
**characterised in that** the method further comprises the steps of:
h) pressurising a gas stream located anywhere downstream the absorption tower (**41**), or anywhere between the ammonia converter (**37**) and the absorption tower (**41**), or upstream the ammonia converter (**37**) in the oxygen-containing stream (**56**) or in the ammonia/oxygen-containing gas mixture (**14**), with the means for pressurising (**53**);
i) mixing the first tail gas stream (**52**) with the oxygen-rich gas (**50**), thereby providing the oxygen-containing gas (**56**);
j) measuring the oxygen concentration in the oxygen-containing gas (**56**);
k) if the oxygen concentration measured in step j) is such that the oxygen to ammonia molar ratio at the inlet of the ammonia converter (**37**) less than 1.25, adjusting the supply of the oxygen-rich gas (**50**) and being mixed in step i) or the supply of the ammonia gas stream (**32**) in step c), such that the oxygen to ammonia molar ratio at the inlet of the ammonia converter (**37**) is at least 1.25;
l) measuring the temperature in the ammonia converter (**37**);
m) adjusting the volume of the first tail gas stream (**52**) being mixed in step i) or the supply of the ammonia gas stream (**32**) supplied in step c), if the temperature measured in step I) is outside the range of 800-950 °C, such that the temperature in the ammonia converter is maintained in the range of 800-950 °C;
n) measuring the oxygen concentration in a tail gas stream downstream the absorption tower (**41**);
o) if the oxygen concentration measured in step n) is less than 0.5% by volume oxygen, adjusting the supply of the oxygen-rich gas (**67**) between the ammonia converter (**37**) and the absorption tower (**41**), such that the tail gas (**5**) contains at least 0.5% by volume oxygen;
p) supplying the oxygen-containing gas (**56**) to the mixing unit (**35**); and
q) repeating steps c) to p).

9. The method according to claim 8, wherein, in step h), part of the tail gas obtained from step f) is pressurised in the means for pressurising (**53**), and wherein the method further comprises the steps of:
g') after step g) and before step h), heating the tail gas (**5**) with the tail gas to be mixed in step i), in the heat exchanger (**73**), thereby bringing the tail gas to be mixed in step i) to a temperature below 300 °C;
g") treating the tail gas (**5**) in the De-NOₓ treatment unit (**71**) before step g) and after step g'); and
r) recovering at least part of the steam generated in the ammonia converter (**37**) in the steam turbine (**51**).

10. The method according to any one of claims 8 to 9, further comprising the step of: s) bleaching the stream of raw nitric acid containing residual NOₓ gas (**27**) in the bleacher (**57**), thereby producing the bleached nitric acid (**63**).

11. The method according to claim 10, in a system according to claim 4, further comprising the step of:
t) supplying part of the oxygen-rich gas (**50**) or part of the oxygen-containing gas (**56**) obtained in step i) or part of the tail gas (**5**) obtained in step g), to the inlet (**58**) bleacher (**57**) in step s).

12. The method according to any one of claims 8 to 11, further comprising the steps of:
u) operating the water electrolyser (**66**), thereby producing oxygen; and
v) providing, from the oxygen produced by the water electrolyser (**66**) in step u), at least the oxygen-rich gas (**50**), the supply for an oxygen-rich gas (**67**) and the oxygen-rich bleaching gas (**60**).

13. The method according to any one of claims 8 to 12, further comprising the step of:
w) expanding the second tail gas stream (**74**) in the tail gas expander (**7**) to atmospheric pressure, thereby producing the expanded tail gas (**70**).

14. The method according to any of claims 8 to 13, wherein, in step a), the pressurised air (**34**) is supplied in the stream in direct fluid communication with the oxygen-rich gas (**50**).

15. The use of the production plant according to any one of claims 1 to 7 for performing the method according to any one of claims 8 to 14.

16. A method for revamping a production plant for producing nitric acid, comprising:
• an air compressor (**36**) for providing a compressed air stream having a pressure P1 (**34**);
• a mixing apparatus (**35**) downstream the oxygen-rich gas (**50**), for mixing the compressed air with an ammonia gas stream (**32**), to produce an ammonia/oxygen-containing gas mixture (**14**);
• means for adjusting the supply of the ammonia gas stream (**32**) to the mixing apparatus (**35**);
• an ammonia converter (**37**) operable at a pressure P1 equal to or lower than the pressure of the source of oxygen-rich gas (**50**), for oxidising ammonia in the ammonia/oxygen-containing gas mixture (**14**), to produce a NOₓ gas/steam mixture (**15**), comprising water and nitric oxide;
• means for measuring the temperature in the ammonia converter (**37**);
• a gas cooler/condenser (**38**) downstream the ammonia converter (**37**), to produce an aqueous diluted nitric acid mixture (**17**) and a gaseous NOₓ stream (**22**);
• an absorption tower (**41**), downstream the gas cooler/condenser (**38**), for absorbing the NOₓ gases from the gaseous NOₓ stream (**22**) in water, to produce a stream of raw nitric acid containing residual NOₓ gas (**27**) and a tail gas (**5**) comprising NOₓ gases, comprising an absorption tower tail gas outlet (**6**) for evacuating the tail gas (**5**);
• means for measuring the concentration of oxygen in a tail gas stream downstream the absorption tower (**41**);
• a supply for an oxygen-rich gas (**67**), for supplying oxygen between the ammonia converter (**37**) and the absorption tower (**41**), such that the tail gas (**5**) contains at least 0.5% by volume oxygen; and
• a tail gas heater (**43**), positioned upstream from the gas cooler/condenser (**38**), for heating the tail gas (**5**) coming from the absorption tower (**41**) to a temperature ranging up to 650 °C with the heat from the NOₓ gas/steam mixture (**15**) coming from the ammonia converter (**37**);
into a production plant according to any one of claims 1 to 7, comprising the steps of:
• introducing a source of pressurised air having a pressure P1 (**34**) in fluid communication with the system;
• introducing a source of an oxygen-rich gas (**50**) upstream the mixing apparatus (**35**);
• introducing means for measuring the oxygen concentration in the oxygen-containing gas (**56**);
• introducing means for adjusting the concentration of oxygen in the oxygen-containing gas (**56**) such that the oxygen to ammonia molar ratio at the inlet of the ammonia converter (**37**) is at least 1.25;
• introducing means for pressurising (**53**) a gas to a pressure P1 anywhere downstream the absorption tower (**41**), or anywhere between the ammonia converter (**37**) and the absorption tower (**41**), or upstream the ammonia converter (**37**) in the oxygen-containing stream (**56**) or in the ammonia/oxygen-containing gas mixture (**14**);
• introducing means for splitting (**55**) a stream of tail gas downstream the absorption tower (**41**) into a first tail gas stream (**52**) in fluid communication with the oxygen-rich gas (**50**), and a second tail gas stream (**74**);
• introducing means for adjusting the amount of tail gas being splitted into the first tail gas stream (**52**) and the second tail gas stream (**74**); and
• removing the air compressor (**36**).
